(19)

Europäisches Patentamt

European Patent Office

Office européen des brevets

(11) **EP 4 346 268 A1**

(12) **DEMANDE DE BREVET EUROPEEN**

(43) Date de publication:
**03.04.2024 Bulletin 2024/14**

(21) Numéro de dépôt: **23199591.1**

(22) Date de dépôt: **26.09.2023**

(51) Classification Internationale des Brevets (IPC):
***H04W 24/02*** *(2009.01)*     *H04W 84/12* *(2009.01)*
*H04W 84/04* *(2009.01)*

(52) Classification Coopérative des Brevets (CPC):
**H04W 24/02;** G06T 7/00; G06V 20/10;
H04W 84/047; H04W 84/12

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **29.09.2022 FR 2209928**

(71) Demandeur: **Orange**
**92130 Issy-les-Moulineaux (FR)**

(72) Inventeurs:
• **LEDUNOIS, Valérie**
 **92326 Chatillon (FR)**
• **JOUIN, Maxime**
 **92326 Chatillon (FR)**
• **LACOCHE, Jeremy**
 **92326 Chatillon (FR)**

(54) **PROCÉDÉ D'OPTIMISATION, TERMINAL DE COMMUNICATION ET AUTOMATE APTE À OPTIMISER UNE COUVERTURE D'UNE ZONE LOCALE PAR UN RÉSEAU DE COMMUNICATION SANS FIL**

(57) L'invention concerne un procédé d'optimisation d'une couverture par un réseau de communication sans fil d'une zone locale, un terminal de communication et un automate apte à optimiser une couverture par un réseau de communication sans fil d'une zone locale.

Un objet de l'invention est un procédé d'optimisation d'une couverture par un réseau de communication sans fil d'une zone locale comportant une fourniture d'au moins une coordonnée de positionnement d'au moins un répéteur dans une zone locale, la au moins une coordonnée de positionnement d'un répéteur étant déterminé en fonction au moins d'une position d'au moins une prise détectée dans la zone locale, la prise étant détectée à partir d'une vidéo captée de la zone locale.

Ainsi la couverture du réseau de communication sans fil est optimisée en fonction des prises nécessaires à l'installation de répéteurs.

[Fig 1]

EP 4 346 268 A1

## Description

### Domaine technique

L'invention concerne un procédé d'optimisation d'une couverture par un réseau de communication sans fil d'une zone locale, un terminal de communication et un automate apte à optimiser une couverture d'une zone locale par un réseau de communication sans fil.

### État de la technique

Actuellement, de nombreux réseaux de communication sans fil couvre des zones locales. Ils utilisent notamment des protocoles de communication et/ou technologies tels que : Wifi™, Bluetooth™, Lifi™, etc.

L'inconvénient de tels réseaux de communication sans fil est d'une part leur portée réduite, généralement d'autant plus en intérieur, (par exemple, pour le Wifi, la portée est d'environ 250m en extérieur et 35m en intérieur). La portée dépend en particulier de la topologie des lieux et des équipements situés à proximité d'un émetteur et/ou d'un récepteur, notamment du routeur domestique.

Une solution est d'utiliser un répéteur.

Dans une première alternative, le répéteur est un répéteur sans fil, il est placé dans la zone de couverture routeur domestique, par exemple à mi-distance entre le routeur domestique et un équipement de communication placé dans une partie non couverte de la zone locale. Il relaie les transmissions de communication sans fil entre les équipements de communication présents dans les parties non couverte par le routeur domestique de la zone locale et le routeur domestique. Dans une zone locale vaste, si l'équipement de communication que l'utilisateur souhaite connecter au réseau sans fil est très éloigné du routeur, l'utilisateur devra utiliser plusieurs répéteurs placés en cascade. Ce qui engendre un coût en équipement plus élevé avec un risque accru d'erreurs de transmission sans fil.

Dans une deuxième alternative, le répéteur comporte une connexion filaire : par exemple Ethernet™. Il peut ainsi être directement placé dans la partie non couverte de la zone locale où se trouve l'équipement de communication à connecter au réseau de communication sans fil si elle dispose d'une prise de connexion filaire, car le répéteur peut alors être connecté directement au routeur domestique via le réseau filaire de la zone locale.

Quelle que soit l'alternative utilisée, elle permet de connecter l'équipement de communication au réseau de communication sans fil à un instant donné, elle ne permet pas de s'assurer que l'équipement de communication reste connecté au réseau de communication sans fil lorsque celui-ci est déplacé dans la zone locale puisque cela ne permet pas de s'assurer qu'il ne reste pas de partie non couverte par le réseau de communication sans fil dans la zone locale.

Actuellement de nouveaux outils sont en cours de commercialisation qui proposent de cartographier la couverture Wifi de la zone locale et d'estimer le nombre de point d'accès nécessaires pour une couverture Wifi fluide et uniforme. La carte de la zone locale est, notamment, préalablement générée par l'utilisateur au moyen d'outils graphiques simples ou téléchargée en tant qu'image utilisée en arrière-plan. Puis, alors que l'utilisateur se déplace dans la zone locale avec un terminal de communication connecté au réseau de communication sans fil, l'outil de cartographie de la couverture Wifi scan tous les signaux Wifi qu'il trouve. Alors, lorsque l'utilisateur arrête le scan de la zone locale, l'outil de cartographie de la couverture Wifi dessine une carte thermique représentant le rapport signal à bruit (« signal-to-noise » en anglais, SNR), ou le niveau de signal, voire le niveau de bruit mesuré... Enfin, il estime la position de nouveaux points d'accès par triangulation des mesures de niveaux de signal. De telles cartes manquent de précision car la carte thermique est simplement superposée à un dessin ou une image de la carte de la zone locale. En outre, les nouveaux points d'accès ne peuvent pas nécessairement être installée aux positions estimées pour diverses raisons : pas de prise électrique et/ou pas de prise Ethernet à la position estimée, etc.

### Exposé de l'invention

Un des buts de la présente invention est de remédier à des inconvénients de l'état de la technique.

Un objet de l'invention est un procédé d'optimisation d'une couverture par un réseau de communication sans fil d'une zone locale comportant une fourniture d'au moins une coordonnée de positionnement d'au moins un répéteur dans une zone locale, la au moins une coordonnée de positionnement d'un répéteur étant déterminé en fonction au moins d'une position d'au moins une prise détectée dans la zone locale, la prise étant détectée à partir d'une vidéo captée de la zone locale.

Ainsi la couverture du réseau de communication sans fil est optimisée en fonction des prises nécessaires à l'installation de répéteurs.

Avantageusement, le procédé d'optimisation comporte une détection de position de prises détectées dans la zone locale, au moins une position d'au moins une prise étant détectée à partir d'une vidéo captée de la zone locale.

Avantageusement, le procédé d'optimisation comporte une capture conjointe d'une vidéo de la zone locale et d'une position associée à au moins une image vidéo de la vidéo captée.

Avantageusement, la au moins une coordonnée de positionnement d'un répéteur est déterminée en outre en fonction de données positionnées de qualité du réseau de communication sans fil.

Avantageusement, une donnée positionnée de qualité du réseau de communication sans fil est une donnée captée dans la zone locale.

Avantageusement, le procédé d'optimisation comporte une capture des données positionnées de qualité du réseau de communication sans fil.

Avantageusement, le procédé d'optimisation comporte une capture conjointe de données de qualité du réseau de communication sans fil et d'une position associée à la donnée de qualité captée.

Avantageusement, le procédé d'optimisation comporte une détection de prise à partir d'une vidéo captée de la zone locale.

Avantageusement, le procédé d'optimisation comporte une analyse de la vidéo captée de la zone locale à partir de laquelle au moins une prise est détectée dans la zone locale.

Avantageusement, le procédé d'optimisation comporte une détermination de la au moins une position d'au moins une prise détectée en fonction d'au moins une position associée à au moins une image vidéo de la vidéo captée.

Avantageusement, le procédé d'optimisation comporte une insertion dans un support graphique d'au moins un indicateur fonction d'au moins une coordonnée de positionnement déterminé de répéteur dans la zone locale.

Avantageusement, le support graphique est au moins un support parmi les suivants :

- une carte de couverture générée en fonction données positionnées captées de qualité du réseau de communication sans fil ;
- la vidéo captée de la zone locale ;
- un support de réalité augmentée.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif, notamment un optimiseur de couverture de réseau local sans fil, voire d'un terminal de communication ou d'un automate et étant conçus pour commander l'exécution des différentes étapes de ce procédé.

L'invention vise donc aussi un programme comprenant des instructions de code de programme pour l'exécution des étapes du procédé d'optimisation lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est encore un terminal de communication apte à se connecter à un réseau de communication sans fil comportant un fournisseur d'au moins une coordonnée de positionnement d'au moins un répéteur dans une zone locale, la au moins une coordonnée de positionnement d'un répéteur étant déterminé en fonction au moins d'une position d'au moins une prise dans la zone locale, la position de la prise étant détectée à partir d'une vidéo captée de la zone locale.

Un objet de l'invention est aussi un automate comportant :

- au moins un actionneur apte à effectuer une action motrice ;
- un émetteur/récepteur au travers d'un réseau de communication sans fil ;
- un fournisseur d'au moins une coordonnée de positionnement d'au moins un répéteur dans une zone locale à au moins un des au moins actionneurs, la au moins une coordonnée de positionnement d'un répéteur étant déterminé en fonction au moins d'une position d'au moins une prise dans la zone locale, la position de la prise étant détectée à partir d'une vidéo captée de la zone locale.

## Brève description des dessins

Les caractéristiques et avantages de l'invention apparaîtront plus clairement à la lecture de la description, faite à titre d'exemple, et des figures s'y rapportant qui représentent :

Figure 1, un schéma simplifié d'un procédé d'optimisation de couverture d'une zone locale par un réseau de communication sans fil selon l'invention,

Figure 2a, un schéma simplifié d'un dispositif, notamment un terminal de communication ou un automate, apte à optimiser une couverture d'une zone locale par un réseau de communication sans fil selon l'invention,

Figure 2b, un schéma simplifié d'un mode de réalisation du dispositif notamment illustré par la figure 2a sous forme d'automate selon l'invention,

Figure 3a, un schéma simplifié illustrant une carte de couverture du réseau de communication sans fil dans laquelle sont insérés au moins un indicateur de positionnement déterminé de répéteur dans la zone locale selon l'invention,

Figure 3b, une image illustrative d'une insertion soit dans une vidéo, soit en réalité augmentée, d'un indicateur de positionnement déterminé de répéteur dans la zone locale selon l'invention.

## Description des modes de réalisation

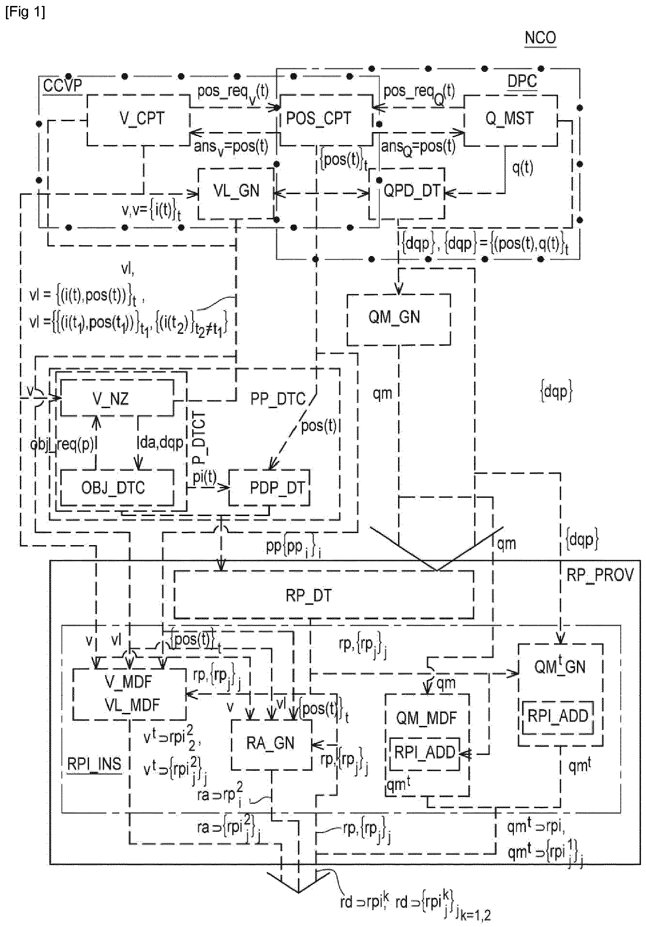

La figure 1 illustre un schéma simplifié d'un procédé d'optimisation de couverture d'une zone locale par un réseau de communication sans fil selon l'invention.

Le procédé d'optimisation NCO d'une couverture par un réseau de communication sans fil d'une zone locale comporte une fourniture RP_PROV d'au moins une coordonnée de positionnement d'au moins un répéteur dans une zone locale, la au moins une coordonnée de positionnement d'un répéteur rp , {rp_j}_j étant déterminé en fonction au moins d'une position pp, {ppi}i d'au moins une prise détectée dans la zone locale, la prise étant détectée à partir d'une vidéo captée v, vl de la zone locale. Par exemple, la fourniture RP_PROV d'au moins une coordonnée de positionnement d'au moins un répéteur fournit au moins une donnée relative à au moins un répéteur rd comportant au moins une coordonnée de positionnement d'un répéteur rp , {rp_j}_j: $rd \supset rpi^k$,

$$rd \supset \left\{rpi_j^k\right\}_{j, k=1,2}$$.

En particulier, le procédé d'optimisation NCO comporte une détection PP_DTC de position pp, {ppi}i de prises détectées dans la zone locale, au moins une position pp, {ppi}i d'au moins une prise étant détectée à partir d'une vidéo captée v, vl de la zone locale.

En particulier, le procédé d'optimisation NCO comporte une capture conjointe CCVP d'une vidéo v={i(t)} de la zone locale et d'une position pos(t) associée à au moins une image vidéo i(t) de la vidéo captée, telle qu'une image captée et/ou une trame, aussi nommée frame en anglais, de la vidéo captée.

En particulier, la au moins une coordonnée de positionnement d'un répéteur rp , {rp_j}_j est déterminé en outre en fonction de données positionnées de qualité dqp(t) du réseau de communication sans fil, dqp(t)=(pos(t),q(t)).

En particulier, une donnée positionnée de qualité dqp(t) du réseau de communication sans fil est une donnée captée dans la zone locale.

En particulier, le procédé d'optimisation NCO comporte une capture DPC des données positionnées de qualité du réseau de communication sans fil.

En particulier, le procédé d'optimisation comporte une capture DPC conjointe de données de qualité du réseau de communication sans fil q(t) et d'une position pos(t) associée à la donnée de qualité captée.

En particulier, le procédé d'optimisation NCO comporte une détection OBJ_DTC de prise à partir d'une vidéo captée v, vl de la zone locale.

En particulier, le procédé d'optimisation NCO comporte une analyse V_NZ de la vidéo captée v, vl de la zone locale à partir de laquelle au moins une prise est détectée OBJ_DTC dans la zone locale.

En particulier, le procédé d'optimisation NCO comporte une détermination PDP_DT de la au moins une position pp, {pp_i}_i d'au moins une prise détectée en fonction d'au moins une position pos(t), pos(t_1) associée à au moins une image vidéo, telle qu'une une image et/ou une trame, aussi nommée frame en anglais, i(t), i(t_1) de la vidéo captée v, vl.

En particulier, le procédé d'optimisation NCO comporte une insertion RPI_INS dans un support graphique v, vl, ra, qm d'au moins un indicateur rpi, {rpi_j}_j fonction d'au moins une coordonnée de positionnement déterminé rp, {rp_j}_j de répéteur dans la zone locale.

En particulier, le support graphique est au moins un support parmi les suivants :

- une carte de couverture qm générée en fonction données dqp(t) positionnées captées de qualité du réseau de communication sans fil ;
- la vidéo v, vl captée de la zone locale ;
- un support de réalité augmentée ra.

La carte qm de couverture est notamment une carte bidimensionnelle, tridimensionnelle... ; et/ou une carte thermique ; etc.

En particulier, le procédé d'optimisation NCO comporte une capture d'une vidéo V_CPT dans laquelle au moins une prise est détecté permettant au procédé d'optimisation NCO de fournir une coordonnée de positionnement d'un répéteur. La vidéo captée v, vl est composée notamment d'une série d'images vidéo v={i(t)}t, notamment d'images et/ou de trames, éventuellement couplée à une position de l'image vidéo dans la zone locale vl={i(t), pos(t)}t, vl={{i(t_1),pos(t_1)}t_{1≠t2},{i(t_2)t_2}. Dans une première alternative, la capture vidéo V_CPT comporte une capture de position (non illustré) ainsi la capture vidéo V_CPT fournit une vidéo localisée vl. Dans une deuxième alternative, la capture vidéo V_CPT reçoit, par exemple suite à une requête de position pos_reqv(t), d'une capture de position POS_CPT, notamment effectuée par le procédé d'optimisation NCO, une position courante pos(t), respectivement dans une réponse ansv=pos(t) à la requête de position, que la capture vidéo associe à l'image vidéo courante captée i(t) : vl={(i(t),pos(t))t, telle que l'image courante et/ou à la trame courante, notamment sous forme de métadonnées.

Dans une troisième alternative, le procédé d'optimisation NCO comporte une génération de vidéo localisée VL_GN générant à partir de la vidéo captée v par la capture vidéo V_CPT et d'au moins une position pos(t), pos(t1) du capteur vidéo mettant en oeuvre la capture vidéo V_CPT une vidéo localisée vl={{i(t_1),pos(t_1)}t_{1≠t2},{i(t_2)t_2}. La position du capteur vidéo est fournie par une capture de position POS_CPT, notamment effectuée par le procédé d'optimisation NCO. En particulier, le procédé d'optimisation NCO comporte une capture conjointe vidéo/position CCVP comportant la capture vidéo V_CPT, éventuellement la capture de position POS_CPT, et notamment la génération de vidéo localisée VL_GN. La capture conjointe vidéo/position CCVP fournit ainsi une vidéo localisée vl de la zone locale.

En particulier, le procédé d'optimisation NCO comporte une capture Q_MST de donnée de qualité q(t) du réseau de communication sans fil, aussi nommée mesure de qualité du réseau de communication sans fil.

Dans une première alternative, la capture de qualité Q_MST comporte une capture de position (non illustré) ainsi la capture de qualité Q_MST fournit une donnée de qualité positionnée dqp(t).

Dans une deuxième alternative, la capture de qualité Q_MST reçoit, par exemple suite à une requête de position pos_reqo(t), d'une capture de position POS_CPT, notamment effectuée par le procédé d'optimisation NCO, une position courante pos(t), respectivement dans une réponse ansa=pos(t) à la requête de position, que la capture de qualité Q_MST associe à la donnée de qualité courante captée q(t) : dqp(t)=(q(t), pos(t)).

Dans une troisième alternative, le procédé d'optimisation NCO comporte une détermination de données de qualité positionnée DQP_DT générant à partir de la donnée de qualité captée q(t) par la capture de qualité Q_MST et d'au moins une position pos(t) du capteur de qualité mettant en oeuvre la capture de qualité Q_MST une donnée de qualité positionnée dqp(t)=(q(t),pos(t)). La position du capteur de qualité est fournie par une capture de position POS_CPT, notamment effectuée par le procédé d'optimisation NCO.

En particulier, le procédé d'optimisation NCO comporte une capture conjointe qualité/position DPC comportant la capture de qualité Q_MST, éventuellement la capture de position POS_CPT, et notamment la détermination de donnée de qualité positionnée QPD_DT. La capture conjointe qualité/position DPC fournit ainsi une donnée de qualité positionnée dqp(t) de la zone locale.

En particulier, le procédé d'optimisation NCO comporte une génération QM_GN d'une carte qm de couverture en fonction des données positionnées {dqp} captées de qualité du réseau de communication sans fil.

En particulier, le procédé d'optimisation NCO comporte une capture de position POS_CPT fournissant une position pos(t) du dispositif, notamment d'un terminal de communication ou d'un automate, mettant en oeuvre le procédé d'optimisation à un instant t.

En particulier, comme l'illustre la figure 1, le procédé d'optimisation NCO comporte en particulier une seule capture de position POS_CPT qui fournit alors une position pos(t) qui est à la fois la position du capteur vidéo à l'instant t de capture de l'image et/ou de la trame i(t) de la vidéo captée et la position du capteur de qualité à l'instant t de capture de la donnée de qualité q(t) à la position pos(t).

Notamment, lorsque le dispositif comporte un capteur vidéo, la capture de position POS_CPT fournit la position du capteur vidéo à l'instant t de capture de l'image et/ou de la trame i(t) de la vidéo capté v, vl ; et/ou, lorsque le dispositif comporte un capteur de qualité, la capture de position POS_CPT fournit la position du capteur qualité à un instant t de capture la qualité q(t).

En particulier, le procédé d'optimisation NCO comporte une détection d'objets OBJ_DTC dans une vidéo OBJ_DTC détectant au moins un prise pi dans une vidéo captée v, vl.

En particulier, le procédé d'optimisation NCO comporte une analyse vidéo V_NZ traitant la vidéo captée v, respectivement la vidéo localisée vl, fournissant des données d'analyse da, respectivement des données d'analyse positionnées dap. La détection d'objets OBJ_DTC détecte au moins une prise pi, voire une position d'au moins une prise pp, {pp_i}_i, par analyse vidéo V_NZ. Par exemple, la détection d'objets OBJ_DTC détecte la au moins une prise pi, voire la position d'au moins une prise pp, {ppi}i en fonction de données d'analyse da, respectivement de données d'analyse positionnée dap fournies par l'analyse vidéo, par exemple suite à une requête d'objet de type prise obj_req(p) de la détection d'objet OBJ_DTC à l'analyse vidéo V_NZ.

En particulier, le procédé d'optimisation NCO comporte une détermination de position de prises détectées PDP_DT en fonction de la prise détectée pi(t), par exemple à un instant t de la vidéo captée v, et de la position captée pos(t) au même instant t. Notamment la détermination de position de prises détectées PDP_DT reçoit des données relatives au prises détectées pi(t) par la détection d'objets OBJ_DTC et des positions captées pos(t) par une capture de position du capteur vidéo, éventuellement la capture de position POS_CPT illustrée par la figure 1.

Dans une première alternative, la détection PP_DTC de la au moins une position pp, {ppi}i d'au moins une prise détectée dans la zone locale comporte la détection d'objets OBJ_DTC dans la vidéo localisée captée vl.

Dans une deuxième alternative, la détection PP_DTC de la au moins une position pp, {ppi}i d'au moins une prise détectée dans la zone locale comporte la détection d'objets OBJ_DTC dans la vidéo captée vl et la détermination de position PDP_DT de la au moins une prise pi détectée par la détection d'objets OBJ_DTC dans une vidéo v en fonction des positions captées pos(t). Notamment, une position déterminée d'une prise détectée pp, {ppi}i est la position captée à un instant t correspondant à l'instant t de capture d'une image vidéo i(t) de la vidéo captée v, image vidéo i(t) dans laquelle une prise pi(t) est détectée.

En particulier, le procédé d'optimisation NCO comporte une détermination de coordonnées de positionnement de répéteur RP_DT en fonction d'au moins une position pp, {ppi}i d'au moins une prise pi(t) détectée dans la zone locale à partir d'une vidéo captée v, vl de la zone locale. Notamment, la détermination de coordonnées de positionnement de répéteur RP_DT reçoit la au moins une position d'au moins une prise détectée pp, {ppi}i provenant de la détection de position de prise PP_DTC à partir d'une vidéo captée v, vl de la zone locale et/ou d'une détermination de positions PDP_DT de prises détectées pi(t) et/ou d'une détection d'objets OBJ_DTC à partir d'une vidéo captée localisée vl. Notamment, la détermination de coordonnées de positionnement de répéteur RP_DT calcule un ou plusieurs des éléments suivants :

- une couverture de réseau de communication à partir de répéteur connecté au moins une prise détectée ;
- une position optimale d'un répéteur en fonction de la couverture du réseau de communication sans fil mesurée par les données de qualité positionnées captées dqp(t) et du type de répéteur. Par exemple, la détermination de coordonnées de positionnement de répéteur RP_DT calcule les coordonnées de positionnement d'un répéteur par triangulation.

La fourniture de coordonnées de positionnement de répéteur RP_PROV comporte notamment la détermination de coordonnées de positionnement de répéteur RP_DT.

En particulier, le procédé d'optimisation NCO comporte une insertion RPI_INS dans un support graphique v, vl, ra, qm, qm+ d'un indicateur rpi, $rpi^1, rpi^2, rpi^k$ de répéteur, l'insertion est fonction d'au moins un positionnement déterminé de répéteur pr, $\{rp_j\}_j$ dans la zone locale.

La fourniture de coordonnées de positionnement de répéteur RP_PROV comporte notamment l'insertion RPI_INS dans un support graphique v, vl, ra, qm, qm+ d'un indicateur rpi, $rpi^1, rpi^2, rpi^k$ de répéteur.

En particulier, le procédé d'optimisation NCO comporte une modification V_MDF, VL_MDF de la vidéo captée v, voire de la vidéo captée localisée vl au moyen d'au moins un indicateur de répéteur $rpi^2, rpi^2_j$. La modification de la vidéo V_MDF, VL_MDF est fonction d'au moins une coordonnée déterminée de positionnement de répéteur pr, $\{rp_j\}_j$ dans la zone locale. Notamment, l'indicateur de répéteur $rpi^2, rpi^2_j$ est ajoutée à l'image vidéo i(t) de la vidéo v, vl correspondant à la coordonnée déterminée de positionnement du répéteur pp, ppi, notamment directement dans l'image vidéo, par incrustation dans l'image vidéo ou en surimposition sur l'image vidéo, etc. L'insertion RPI_INS comporte notamment la modification de vidéo V_MDF, VL_MDF. Ainsi, une donnée fournie relative au répéteur rd comporte notamment une vidéo modifiée v+, vl+ comportant au moins un indicateur de répéteur $rpi^2, rpi^2_j$ : $v^+ \supset rpi^2$,

$$vl^+ \supset \left\{rpi^2_j\right\}_j.$$

En particulier, le procédé d'optimisation NCO comporte une génération de données de réalité augmentée RA_GN comportant au moins indicateur de répéteur $rpi^2, rpi^2_j$ : $ra \supset rpi^2,$ $ra \supset \left\{rpi^2_j\right\}_j$. L'insertion RPI_INS comporte notamment la génération de données de réalité augmentée RA_GN. Ainsi, une donnée fournie relative au répéteur rd comporte notamment des données de réalité augmentée ra.

En particulier, le procédé d'optimisation NCO comporte une mise à jour QM_MDF d'une carte de couverture qm générée en fonction données dqp(t) positionnées captées de qualité du réseau de communication sans fil, la mise à jour QM_MDF est fonction d'au moins une coordonnée rp, $\{rp_j\}_j$ déterminée de positionnement

d'au moins un répéteur. Par exemple, la mise à jour de cartes de couverture QM_MDF comporte un ajout RPI_ADD d'un indicateur de répéteur $rpi^1, rpi^1_j$ sur la carte de couverture qm précédemment générée QM_GN notamment par le procédé d'optimisation NCO. La carte mise à jour qm+ comporte ainsi au moins un indicateur de répéteur rpi1, rpi1j positionné sur la carte en fonction de la au moins une coordonnée de positionnement du répéteur rp, $rp_j$ ainsi indiqué. L'insertion RPI_INS comporte notamment la mise à jour QM_MDF d'une carte de couverture qm préalablement générée.

En particulier, le procédé d'optimisation NCO comporte une génération QM+_GN d'une carte de positionnement de répéteurs qm+ non seulement en fonction données dqp(t) positionnées captées de qualité du réseau de communication sans fil mais aussi d'au moins une coordonnée rp, $\{rp_j\}_j$ déterminée de positionnement d'au moins un répéteur. Par exemple, la génération de cartes de positionnement de répéteurs QM+_GN comporte un ajout RPI_ADD d'un indicateur de répéteur $rpi^1, rpi^1_j$ sur une carte générée par la génération QM+_GN de carte de positionnement de répéteur. Par exemple, la génération de cartes de positionnement de répéteur QM+_GN comporte une génération (non illustrée) de carte de couverture qm en fonction données dqp(t) positionnées captées de qualité du réseau de communication sans fil préalable à l'ajout d'indicateur de répéteur RPI_ADD. La carte de positionnement de répéteurs qm+ comporte ainsi au moins un indicateur de répéteur rpi1, rpi1j positionné sur la carte en fonction de la au moins une coordonnée de positionnement du répéteur rp, $rp_j$ ainsi indiqué. L'insertion RPI_INS comporte notamment la génération QM+_GN d'une carte de positionnement de répéteurs qm+.

La carte qm+, carte de couverture modifiée ou carte de positionnement de répéteur, est obtenue :

- soit par intégration du au moins un indicateur de répéteur rpi1, rpi1j à la carte précédemment générée qm,
- soit par surimposition du au moins un indicateur de répéteur rpi1, rpi1j sur la carte précédemment générée qm, etc.

La carte qm+ , carte de couverture modifiée ou carte de positionnement de répéteur, est notamment une carte bidimensionnelle, tridimensionnelle... ; et/ou une carte thermique ; etc.

Par exemple, l'indicateur $rpi^1, rpi^1_j, rpi^2, rpi^2j$ comporte un cadre $pi_j$ encadrant au moins une prise détectée à une coordonnée déterminée de positionnement d'un répéteur et, éventuellement un symbole de répéteur rs, $rs_j$ permettant notamment d'indiquer le type de répéteur (sans fil, filaire. Le symbole de répéteur rs, $rs_j$ est notamment un symbole alphanumérique, tel qu'un nom, un acronyme..., et/ou un symbole graphique. Dans le cas de répéteur sans fil, le cadre $pi_j$ encadre une prise électrique et une prise de communication filaire, par exemple Ethernet.

Ainsi, une donnée fournie relative au répéteur rd comporte notamment une carte qm+, soit une carte de couverture modifiée, soit une carte de positionnement de répéteur.

En particulier, le procédé d'optimisation NCO comporte une génération de commande d'un automate CMD_GN (non illustrée), la commande cmd(rp), $\{cmd_j(rp_j)\}_j$, $cmd(\{rp_j\}_j)$ ainsi générée permet de déplacer l'automate à une coordonnée déterminée de positionnement d'un répéteur. Lorsque plusieurs répéteurs sont déterminés, la génération de commande CMD_GN génère soit une commande cmd permettant de déplacer l'automate successivement à chacune des coordonnées déterminées de positionnement des répéteurs, soit une série de commandes $\{cmd_j(rp_j)\}_j$ chaque commande $cmd_j$ distincte permettant de déplacer l'automate à une coordonnée déterminée distincte de positionnement d'un des répéteurs.

Dans une première alternative, la commande générée permet de commander à l'automate d'indiquer le positionnement du répéteur, par exemple au moyen d'un faisceau lumineux diriger vers la ou les prises de connexion du répéteur, prise électronique et/ou prise de communication filaire, ou au moyen d'un bras automatisé.

Dans une deuxième alternative, la commande générée permet de commander à l'automate de connecter un répéteur à la prise, voire aux prises en fonction du type de répéteur, se trouvant à la coordonnée déterminée de positionnement du répéteur, notamment en commandant un bras robotisé de l'automate.

La fourniture de coordonnées de positionnement de répéteur RP_PROV comporte notamment la génération de commande CMD_GN. La donnée relative au répéteur rd comporte alors la commande d'automate ainsi générée cmd.

Un mode de réalisation particulier du procédé d'optimisation est un programme comprenant des instructions de code de programme pour l'exécution des étapes du procédé d'optimisation lorsque ledit programme est exécuté par un processeur.

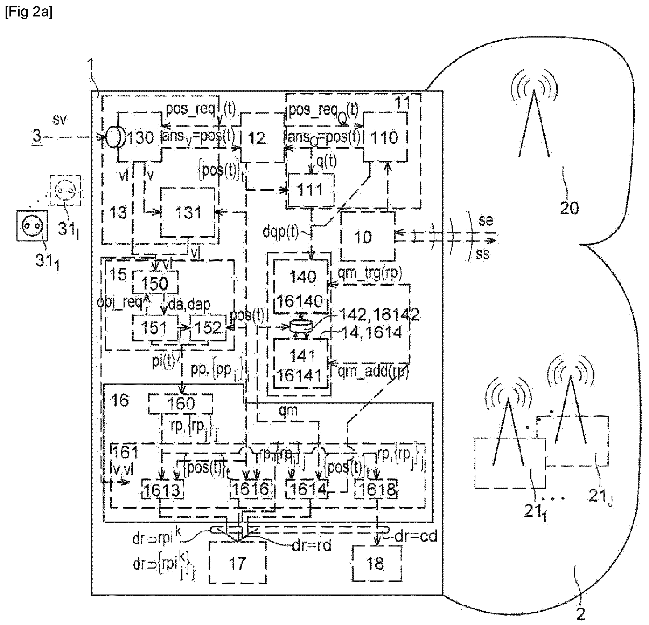

La figure 2a illustre un schéma simplifié d'un dispositif, notamment un terminal de communication ou un automate, apte à optimiser une couverture d'une zone locale par un réseau de communication sans fil selon l'invention.

Le dispositif 1 est notamment un dispositif parmi les suivants :

- un terminal de communication apte à se connecter à un réseau de communication sans fil ;
- un automate comportant :

  ◦ au moins un actionneur 18, 181, 182', 182", 182''' apte à effectuer une action motrice am ;
  ◦ un émetteur/récepteur 10 au travers d'un réseau de communication sans fil 2.

La figure 2a montre un réseau de communication sans fil 2 notamment généré par au moins un dispositif de communication 20, tel qu'un routeur domestique ou une passerelle domestique apte à échanger des signaux via ce réseau de communication sans fil avec au moins un équipement de communication présent dans la zone de couverture du réseau de communication sans fil.

La zone locale 3 que l'utilisateur souhaite couvrir avec le réseau de communication sans fil 2 comporte une ou plusieurs prises $31_1...31_I$ auxquelles au moins un répéteur $21_1...21_J$ peut être connecté soit pour s'alimenter (prise électrique), soit pour communiquer (prise de communication filaire, tel qu'Ethernet).

En particulier, un dispositif 1 ou au moins un périphérique (non illustré) du dispositif 1 comporte :

- au moins un capteur vidéo 13, 130 ; et
- éventuellement un capteur de position 12.

En particulier, le capteur vidéo 13, 130 et, éventuellement, le capteur de position 12 sont connectés à un détecteur relatif aux prises 151, 15. Notamment, lorsque le détecteur est un détecteur de prises 151, le capteur vidéo 13, 130 et, éventuellement, le capteur de position 12 sont connectés à un analyseur vidéo 150 connecté au détecteur de prises 151. En particulier, le dispositif 1 comporte le détecteur relatif aux prises 151, 15.

En particulier, un dispositif 1 ou au moins un périphérique (non illustré) du dispositif 1 comporte :

- un module de communication 10 apte à échanger via le réseau de communication sans fil 2, notamment un émetteur/récepteur apte à émettre un signal sortant ss et/ou à recevoir un signal entrant se via le réseau de communication sans fil 2,
- au moins un capteur de qualité 11, 110 ; et
- éventuellement un capteur de position 12.

Par exemple, le périphérique du dispositif 1 est un dispositif nomade connecté au dispositif 1, par exemple via un réseau local éventuellement distinct du réseau de communication sans fil 2 (en particulier lorsque le dispositif 1 comporte le capteur vidéo 13, 130). Ainsi, lorsque le dispositif 1 n'est pas un dispositif nomade, l'utilisation du périphérique facilite les captures vidéo et/ou de qualité dans la zone locale.

En particulier, le capteur de qualité 11, 110 et, éventuellement, le capteur de position 12 sont connectés à un générateur de cartes 14, 140 relatifs au réseau de communication sans fil 2. En particulier, le dispositif 1 comporte le générateur de cartes 14, 140.

Le dispositif 1 comporte un fournisseur 16 d'au moins une coordonnée de positionnement d'au moins un répéteur $21_1...21_N$ dans une zone locale 3. Le fournisseur 16 est connecté au détecteur relatif aux prises 15, 150 et, soit au capteur de qualité 11, 110, soit au générateur de cartes 14, 140.

En particulier, le fournisseur de coordonnées de positionnement de répéteurs 16 est connecté à un module ou un système de reproduction 17, tel qu'un afficheur 2D, 3D, etc. notamment un écran, un holographe ; et/ou un haut-parleur, un système de production audio 3D, etc. Ainsi, les indicateurs de répéteurs sont reproduits visuellement et/ou de manière sonore. Par exemple, un indicateur sonore de répéteur peut être un son dont le volume augmente lorsque l'utilisateur se rapproche de la au moins une coordonnée de positionnement du répéteur, et/ou un son 3D reproduit de façon à ce que l'utilisateur le perçoive comme provenant de la au moins une coordonnée de positionnement du répéteur de la zone locale. Notamment, le dispositif 1 comporte le module/système de reproduction 17.

En particulier, le fournisseur de coordonnées de positionnement de répéteurs 16 est connecté à au moins un actionneur 18, tel qu'un dispositif de déplacement, un bras robotisé, etc. Notamment, l'actionneur 18 est un actionneur d'un automate connecté au dispositif 1 ou du dispositif 1 constituant un automate.

En particulier, le dispositif 1 comporte un optimiseur 19 de couverture d'une zone locale par le réseau de communication sans fil. L'optimiseur 19 comporte le fournisseur 16 de coordonnées de positionnement de répéteur dans la zone locale 3, et éventuellement au moins un des dispositifs suivants :

- au moins un capteur vidéo 13, 130 ;
- un capteur de position 12.
- au moins un capteur de qualité 11, 110 ;
- un générateur de cartes 14, 140 relatifs au réseau de communication sans fil 2 ;
- un détecteur relatif aux prises 151, 15.

Le dispositif 1 comporte un fournisseur 16 d'au moins une coordonnée de positionnement d'au moins un répéteur $21_1...21_N$ dans une zone locale 3. La au moins une coordonnée de positionnement d'un répéteur rp , $\{rp_j\}_j$ est déterminée en fonction au moins d'une position pp, $\{ppi\}_i$ d'au moins une prise détectée dans la zone locale. La prise est détectée à partir d'une vidéo captée v, vl de la zone locale 3. Par exemple, le fournisseur 16 d'au moins une coordonnée de positionnement d'au moins un répéteur fournit au moins une donnée rd relative à au moins un répéteur comportant au moins une coordonnée de positionnement d'un répéteur rp , $\{rp_j\}_j$ : $rd \supset$

$$rd \supset \left\{ rpi_j^k \right\}_{j', k=1,2}$$
$$rpi^{k,}$$

Le dispositif 1 comporte notamment un module de communication 10, aussi nommé émetteur et/ou récepteur, au travers d'un réseau de communication sans fil 2.

En particulier, un capteur vidéo 130 capte une vidéo v, vl dans laquelle au moins une prise $31_1...31_I$ est détectée permettant au fournisseur 16 de fournir une coordonnée de positionnement d'un répéteur. La vidéo captée v, vl est composée notamment d'une série d'image vidéo v={i(t)}t, éventuellement couplée à une position de l'image vidéo dans la zone locale vl={i(t), pos(t)}t, vl={{i(t₁),pos(t₁)}t₁≠t2,{i(t₂)t₂}. Notamment, le dispositif 1 comporte le capteur vidéo 130.

En particulier, un capteur vidéo localisée 13 fournissant une vidéo captée localisée vl, notamment la vidéo captée comporte dans les métadonnées d'au moins une image vidéo i(t) de la vidéo $vl \supset \{i(t)\}_t$, la position de capture de l'image vidéo pos(t) : $vl \supset i(t) \leftrightarrow pos(t)$. Le capteur vidéo localisée 13 comporte éventuellement le capteur vidéo 130. Notamment, le dispositif 1 comporte le capteur vidéo localisée 13.

Dans une première alternative, le capteur vidéo 130 comporte un capteur de position (non illustré) ainsi le capteur vidéo 130 fournit une vidéo localisée vl. En particulier, le capteur vidéo localisée 13 est alors constitué par le capteur vidéo 130.

Dans une deuxième alternative, le capteur vidéo 130 reçoit, par exemple suite à une requête de position pos_reqv(t), d'un capteur de position 12, notamment implémenté dans le dispositif 1, une position courante pos(t), respectivement dans une réponse ansv=pos(t) à la requête de position, que le capteur vidéo 130 associe à l'image vidéo courante captée i(t) : vl={(i(t),pos(t))}, notamment sous forme de métadonnées. En particulier, soit le capteur vidéo localisée 13 est alors constitué par le capteur vidéo 130, soit le capteur vidéo localisée 13 comporte le capteur vidéo 130 et le capteur de position 12.

Dans une troisième alternative, un générateur de vidéo localisée 131 est apte à générer, à partir de la vidéo captée v par le capteur vidéo 130 et d'au moins une position pos(t), pos(t1) du capteur vidéo 130, une vidéo localisée vl={{i(t₁),pos(t₁)}t₁≠t2,{i(t₂)t₂}. La position du capteur vidéo 130 est fournie par un capteur de position 12, implémenté dans le dispositif 1 (lorsque le dispositif 1 comporte le capteur vidéo 130) ou dans un périphérique vidéo (non illustré) du dispositif 1 (lorsque le périphérique vidéo comporte le capteur vidéo 130). Un périphérique du dispositif 1 est une interface électronique connectée au dispositif 1 apte à fournir au dispositif 1 un signal fonction d'un signal capté ou saisi. En particulier, le capteur vidéo localisée 13 comporte le capteur vidéo 130, le générateur de vidéo localisée 131, et éventuellement le capteur de position 12.

En particulier, le capteur de vidéo localisée 13 est un capteur conjoint vidéo/position comportant le capteur vidéo 130, éventuellement le capteur de position 12, et notamment le générateur de vidéo localisée 131. Le capteur conjoint vidéo/position 13 fournit ainsi une vidéo localisée vl de la zone locale.

En particulier, un capteur 110 de qualité capte des données de qualité q(t) du réseau de communication sans fil, aussi nommée mesure de qualité du réseau de communication sans fil. Notamment, le dispositif 1 comporte le capteur de qualité 110.

En particulier, un capteur de qualité positionnée 11 fournit des données de qualité positionnées dqp(t) du réseau de communication sans fil. Le capteur de qualité positionnée 11 comporte éventuellement le capteur de qualité 110. Notamment, le dispositif 1 comporte le capteur de qualité positionnée 11.

Dans une première alternative, le capteur de qualité 110 comporte un capteur de position (non illustré) ainsi le capteur de qualité 110 fournit une donnée de qualité positionnée dqp(t). En particulier, le capteur de qualité positionnée 11 est alors constitué par le capteur de qualité 110.

Dans une deuxième alternative, le capteur de qualité 110 reçoit, par exemple suite à une requête de position pos_reqo(t), d'un capteur de position 12, notamment implémenté dans le dispositif 1, une position courante pos(t), respectivement dans une réponse ansa=pos(t) à la requête de position, que le capteur de qualité 110 associe à la donnée de qualité courante captée q(t) : dqp(t)=(q(t),pos(t). En particulier, soit le capteur de qualité positionnée 11 est alors constitué par le capteur de qualité 110, soit le capteur de qualité positionnée 11 comporte le capteur de qualité 110 et le capteur de position 12.

Dans une troisième alternative, un calculateur 111 de qualité positionnée est apte à déterminer des données de qualité positionnée, à partir de la donnée de qualité captée q(t) par le capteur de qualité 110 et d'au moins une position pos(t) du capteur de qualité 110, une donnée de qualité positionnée dqp(t)=(q(t),pos(t). La position du capteur de qualité 110 est fournie par un capteur de position 12, notamment implémenté par le dispositif 1 (lorsque celui-ci comporte le capteur de qualité 110) ou dans un périphérique (non illustré) du dispositif 1 (lorsque le périphérique comporte le capteur de qualité 110). En particulier, le capteur de qualité positionnée 11 comporte le capteur de qualité 110, le calculateur de qualité positionnée 111, et éventuellement le capteur de position 12.

En particulier, le capteur de qualité positionnée 13 est un capteur conjoint qualité/position comportant le capteur de qualité 110, éventuellement le capteur de position 12, et notamment le calculateur de donnée de qualité positionnée 111. Le capteur conjoint qualité/position 13 fournit ainsi une donnée de qualité positionnée dqp(t) de la zone locale 3.

En particulier, un générateur 140, 16140 de cartes de couverture est apte à générer une carte qm de couverture d'un réseau de communication sans fil en fonction de données positionnées {dqp} captées de qualité du réseau de communication sans fil, par exemple reçu d'un capteur de qualité 110 ou d'un capteur de qualité positionnée 11. Notamment, le dispositif 1 comporte le générateur de carte de couverture 140, 16140.

En particulier, un capteur de position 12 est apte à fournir une position pos(t). La position pos(t) fournie par le capteur de position 12 est une position captée du capteur de position 12 à l'instant t. Ainsi, lorsque le capteur de position 12 est implémenté dans ou colocalisé avec un capteur vidéo 130, un capteur vidéo localisée 13, un capteur de qualité 110, un capteur de qualité positionnée 11, et/ou le dispositif 1, la position captée fournie par le capteur de position à l'instant t : pos(t) est la position respectivement du capteur vidéo 130, du capteur vidéo localisée 13, du capteur de qualité 110, du capteur de qualité positionnée 11, et/ou du dispositif 1. Notamment, le dispositif 1 comporte le capteur de position 12.

En particulier, comme l'illustre la figure 2a, le dispositif 1 comporte en particulier un seul capteur de position 12 qui fournit alors une position pos(t) qui est à la fois la position du capteur vidéo 13, 130 à l'instant t de capture de l'image vidéo i(t), telle que l'image et/ou la trame, de la vidéo captée et la position du capteur de qualité 11, 110 à l'instant t de capture de la donnée de qualité q(t) à la position pos(t). Notamment, lorsque le dispositif 1 comporte un capteur vidéo 13, 130, le capteur de position 12 fournit la position du capteur vidéo à l'instant t de capture de l'image vidéo i(t), telle que l'image et/ou la trame, de la vidéo capté v, vl ; et/ou, lorsque le dispositif 1 comporte un capteur de qualité, le capteur de position 12 fournit la position du capteur qualité à un instant t de capture la qualité q(t).

En particulier, un détecteur d'objets 151 dans une vidéo est apte à détecter au moins un prise pi dans une vidéo captée v, vl, notamment fournie par le capteur vidéo 130 ou le capteur vidéo localisée 13. Notamment, le dispositif 1 comporte le détecteur d'objets 151.

En particulier, un analyseur vidéo 150 est apte à traiter la vidéo captée v, respectivement la vidéo localisée vl, et à fournir des données d'analyse da, respectivement des données d'analyse positionnées dap. Notamment, le dispositif 1 comporte l'analyseur vidéo 150.

Notamment, le détecteur d'objets 151 est apte à détecter au moins une prise pi, voire une position d'au moins une prise pp, $\{pp_i\}_i$, par analyse vidéo notamment au moyen de l'analyseur vidéo 150. Par exemple, le détecteur d'objets 151 est apte à détecter la au moins une prise pi, voire la position d'au moins une prise pp, {ppi}i en fonction de données d'analyse da, respectivement de données d'analyse positionnée dap fournies par l'analyseur vidéo 150, par exemple suite à une requête d'objet de type prise obj_req(p) du détecteur d'objets 151 à l'analyseur vidéo 150.

En particulier, un calculateur de position de prises détectées 152 est apte à déterminer une position d'au moins une prise détectée en fonction de la prise détectée pi(t), par exemple à un instant t de la vidéo captée v, et de la position captée pos(t) au même instant t. Notamment le calculateur de position de prises détectées 152 est apte à recevoir des données relatives au prises détectées pi(t) par le détecteur d'objets 151 et des positions captées pos(t) par un capteur de position 12 du capteur vidéo, éventuellement le capteur de position 12 illustré par la figure 2a. Notamment, le dispositif 1 comporte le calculateur de position 152 de prises détectées.

En particulier, un détecteur de position de prises détectées 15 est apte à détecter au moins une position d'au moins une prise détectée dans une vidéo captée. Notamment, le dispositif 1 comporte le détecteur de position de prises détectées 15. Dans une première alternative, le détecteur 15 de la au moins une position pp, {ppi}i d'au moins une prise détectée dans la zone locale comporte le détecteur d'objets 151 dans la vidéo localisée captée vl.

Dans une deuxième alternative, le détecteur 15 de la au moins une position pp, {ppi}i d'au moins une prise détectée dans la zone locale comporte le détecteur d'objets 151 dans la vidéo captée vl et le calculateur de position 152 de prises détectées pi par le détecteur d'objets 151 dans une vidéo v en fonction des positions captées pos(t). Notamment, une position déterminée d'une prise détectée pp, {ppi}i est la position captée à un instant t correspondant à l'instant t de capture d'une image vidéo i(t) de la vidéo captée v, image vidéo i(t) dans laquelle une prise pi(t) est détectée.

En particulier, un analyseur de couverture d'un réseau de communication sans fil 160, aussi nommé analyseur de couverture réseau sans fil, apte à déterminer au moins une coordonnée de positionnement d'au moins un répéteur en fonction d'au moins une position pp, {ppi}i d'au moins une prise pi(t) détectée dans la zone locale 3 à partir d'une vidéo captée v, vl de la zone locale. Notamment, l'analyseur de couverture réseau sans fil 160 reçoit la au moins une position d'au moins une prise détectée pp, {pp$_i$}$_i$ provenant du détecteur de position de prise 15 à partir d'une vidéo captée v, vl de la zone locale et/ou d'un calculateur de positions 152 de prises détectées pi(t) et/ou d'un détecteur d'objets 151 à partir d'une vidéo captée localisée vl. Notamment, l'analyseur de couverture réseau sans fil 160 calcule un ou plusieurs des éléments suivants :

- une couverture de réseau de communication à partir de répéteur connecté à au moins une prise détectée ;
- une position optimale d'un répéteur en fonction de la couverture du réseau de communication sans fil mesurée par les données de qualité positionnées captées dqp(t) et du type de répéteur. Par exemple, l'analyseur de couverture réseau sans fil 160 calcule les coordonnées de positionnement d'un répéteur par triangulation. Le dispositif 1 comporte, par exemple, l'analyseur de couverture réseau sans fil 160.

Le fournisseur de coordonnées de positionnement de répéteur 16 comporte notamment l'analyseur de couverture réseau sans fil 160.

En particulier, un intégrateur 161 d'indicateur de répéteur est apte à insérer un indicateur rpi, rpi$^1$,rpi$^2$,rpi$^k$ de répéteur dans un support graphique v, vl, ra, qm, qm+ en fonction d'au moins un positionnement déterminé de répéteur pr, {rp$_j$}$_j$ dans la zone locale 3. Le dispositif 1 comporte, par exemple, l'intégrateur 161 d'indicateur de répéteur.

Le fournisseur de coordonnées de positionnement de répéteur 16 comporte notamment l'intégrateur 161 d'indicateur de répéteur.

En particulier, un modificateur de vidéo 1613 est apte à modifier la vidéo captée v, voire de la vidéo captée localisée vl au moyen d'au moins un indicateur de répéteur rpi$^2$, rpi$^2_j$. Le modificateur de vidéo 1613 effectue la modification en fonction d'au moins une coordonnée déterminée de positionnement de répéteur pr, {rp$_j$}$_j$ dans la zone locale. Notamment, le modificateur de vidéo 1613 ajoute l'indicateur de répéteur rpi$^2$, rpi$^2$j à l'image vidéo i(t) de la vidéo v, vl correspondant à la coordonnée déterminée de positionnement du répéteur pp, ppi, notamment directement dans l'image vidéo, par incrustation dans l'image vidéo ou en surimposition sur l'image vidéo, etc. Le dispositif 1 comporte, par exemple le modificateur de vidéo 1613.

L'intégrateur 161 d'indicateur de répéteur comporte notamment le modificateur de vidéo 1613. Ainsi, une donnée fournie relative au répéteur rd comporte notamment une vidéo modifiée v+, vl+ comportant au moins un indicateur de répéteur rpi$^2$, rpi$^2$j : $v^+ \supset$ rpi$^2$,

$$vl^+ \supset \{rpi^2_j\}_j$$.

En particulier, un générateur de données de réalité augmentée 1616 est apte à créer une réalité augmentée au moyen de données de réalité augmenté reproductibles, les données de réalité augmentée ainsi générées comportant au moins indicateur de répéteur rpi$^2$,

$$ra \supset \{rpi^2_j\}_j$$

rpi$^2$j : $ra \supset rpi^2$, . Le dispositif 1 comporte, par exemple, le générateur de données de réalité augmentée 1616. L'intégrateur 161 d'indicateur de répéteur comporte notamment le générateur de données de réalité augmentée 1616. Ainsi, une donnée fournie relative au répéteur rd comporte notamment des données de réalité augmentée ra.

En particulier, un adaptateur de carte de couverture 141, 16141 est apte à mettre à jour une carte de couverture qm générée en fonction données dqp(t) positionnées captées de qualité du réseau de communication sans fil en fonction d'au moins une coordonnée rp, {rp$_j$}$_j$ déterminée de positionnement d'au moins un répéteur. Par exemple, l'adaptateur de carte de couverture 141, 16141 comporte un incorporateur (non illustré) apte à insérer un indicateur de répéteur rpi$^1$, rpi$^1_j$ sur la carte de couverture qm précédemment générée notamment par le générateur de carte 140, 1640. La carte mise à jour qm+ comporte ainsi au moins un indicateur de répéteur rpi1, rpi1j positionné sur la carte en fonction de la au moins une coordonnée de positionnement du répéteur rp, rp$_j$ ainsi indiqué. Le dispositif 1 comporte, par exemple, l'adaptateur 141, 16141 de carte de couverture.

L'intégrateur 161 d'indicateur de répéteur comporte notamment l'adaptateur 16141 de carte de couverture préalablement générée.

En particulier, un générateur 1614 de carte de positionnement de répéteurs qm+ non seulement en fonction données dqp(t) positionnées captées de qualité du réseau de communication sans fil mais aussi d'au moins une coordonnée rp, $\{rp_j\}_j$ déterminée de positionnement d'au moins un répéteur. Par exemple, le générateur 1614 d'une carte de positionnement de répéteurs qm+ comporte un incorporateur (non illustré) apte à insérer un indicateur de répéteur $rpi^1$, $rpi^1_j$ sur une carte générée par le générateur 1614 de carte de positionnement de répéteurs. Par exemple, le générateur 1614 de carte de positionnement de répéteurs comporte un générateur 16140 de carte de couverture qm en fonction données dqp(t) positionnées captées de qualité du réseau de communication sans fil et un intégrateur 16141 d'indicateur de répéteur, l'intégrateur 16141 étant apte à insérer au moins un indicateur de répéteur sur la carte générée fournie par le générateur de carte de couverture 16140. La carte de positionnement de répéteurs qm+ comporte ainsi au moins un indicateur de répéteur rpi1, rpi1j positionné sur la carte en fonction de la au moins une coordonnée de positionnement du répéteur rp, $rp_j$ ainsi indiqué. Le dispositif 1 comporte, par exemple, Le dispositif 1 comporte, par exemple, l'adaptateur 141, 16141 de carte de couverture.

L'intégrateur 161 d'indicateur de répéteur comporte notamment le générateur 1614 de carte de positionnement de répéteurs qm+.

La carte qm+, carte de couverture modifiée ou carte de positionnement de répéteur, est obtenue :

- soit par intégration du au moins un indicateur de répéteur rpi1, rpi1j à la carte précédemment générée qm,
- soit par incrustation du au moins un indicateur de répéteur rpi1, rpi1j à la carte précédemment générée qm,
- soit par surimposition du au moins un indicateur de répéteur rpi1, rpi1j sur la carte précédemment générée qm, etc.

Par exemple, l'indicateur $rpi^1$, $rpi^1_j$, $rpi^2$, $rpi^2j$ comporte un cadre $pi_j$ encadrant au moins une prise détectée à une coordonnée déterminée de positionnement d'un répéteur et, éventuellement un symbole de répéteur rs, $rs_j$ permettant notamment d'indiquer le type de répéteur (sans fil, filaire. Le symbole de répéteur rs, $rs_j$ est notamment un symbole alphanumérique, tel qu'un nom, un acronyme..., et/ou un symbole graphique. Dans le cas de répéteur sans fil, le cadre $pi_j$ encadre une prise électrique et une prise de communication filaire, par exemple Ethernet. Eventuellement l'indicateur $rpi^1$, $rpi^1_j$, $rpi^2$, $rpi^2j$ comporte en outre un symbole de position 3D ip, $ip_j$, le symbole de position 3D indique notamment la hauteur de la prise à la coordonnée de positionnement de la prise sur une carte bidimensionnelle qm+.

Ainsi, une donnée fournie relative au répéteur rd comporte notamment une carte qm+, soit une carte de couverture modifiée, soit une carte de positionnement de répéteur.

En particulier, un générateur de commande 1618 apte à générer au moins un commande cmd(rp), $\{cmd_j(rp_j)\}_j$, cmd($\{rp_j\}_j$) de déplacement d'au moins un automate à une coordonnée déterminée de positionnement d'un répéteur. Lorsque plusieurs répéteurs sont déterminés, le générateur de commande d'un automate 1618 est apte à générer soit une commande cmd apte à déplacer l'automate successivement à chacune des coordonnées déterminées de positionnement des répéteurs, soit une série de commandes $\{cmd_j(rp_j)\}_j$ chaque commande $cmd_j$ distincte étant apte à déplacer l'automate à une coordonnée déterminée distincte de positionnement d'un des répéteurs.

Dans une première alternative, la commande générée est apte à commander à l'automate d'indiquer le positionnement du répéteur, par exemple au moyen d'un faisceau lumineux diriger vers la ou les prises de connexion du répéteur, prise électronique et/ou prise de communication filaire, ou au moyen d'un bras automatisé.

Dans une deuxième alternative, la commande générée est apte à commander à l'automate de connecter un répéteur à la prise, voire aux prises en fonction du type de répéteur, se trouvant à la coordonnée déterminée de positionnement du répéteur, notamment en commandant un bras robotisé de l'automate.

Le fournisseur de coordonnées de positionnement de répéteur 16 comporte notamment le générateur de commande d'un automate 1618. La donnée relative au répéteur rd comporte alors la commande d'automate ainsi générée cmd.

Dans un premier mode de réalisation, le dispositif 1 est un terminal de communication apte à se connecter à un réseau de communication sans fil comportant un fournisseur 16 d'au moins une coordonnée de positionnement d'au moins un répéteur $21_1$... $21_N$ dans une zone locale 3. La au moins une coordonnée de positionnement d'un répéteur rp , $\{rp_j\}_j$ est déterminée en fonction au moins d'une position pp, $\{ppi\}i$ d'au moins une prise détectée dans la zone locale. La prise est détectée à partir d'une vidéo captée v, vl de la zone locale 3. Par exemple, le fournisseur 16 d'au moins une coordonnée de positionnement d'au moins un répéteur fournit au moins une donnée rd relative à au moins un répéteur comportant au moins une coordonnée de positionnement d'un répéteur rp , $\{rp_j\}_j$ : $rd \supset rpi^k$,

$$ rd \supset \left\{ rpi^k_j \right\}_{j', k=1,2} .$$

En particulier, le terminal de communication 1 comporte un optimiseur 19 de couverture d'une zone locale par le réseau de communication sans fil. L'optimiseur 19 comporte le fournisseur 16 de coordonnées de positionnement de répéteur dans la zone locale 3.

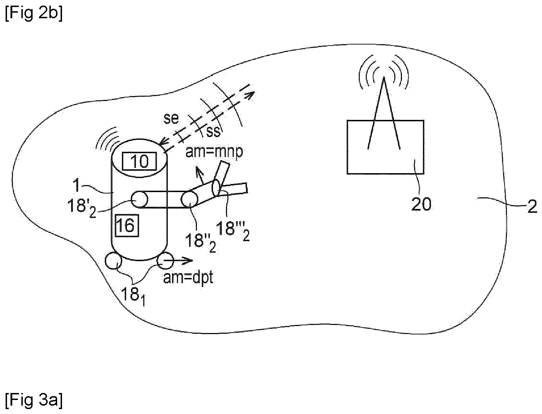

La figure 2b illustre un schéma simplifié d'un mode de réalisation du dispositif notamment illustré par la figure 2a sous forme d'automate selon l'invention.

Dans un deuxième mode de réalisation, le dispositif 1 est un automate, notamment tel qu'illustré par la figure 2b, comportant :

- au moins un actionneur 18, $18_1$, $18_2$', $18_2$", $18_2$''' apte à effectuer une action motrice am;
- un émetteur/récepteur 10 au travers d'un réseau de communication sans fil 2;
- un fournisseur 16 d'au moins une coordonnée de positionnement d'au moins un répéteur $21_1$...$21_N$ dans une zone locale 3. La au moins une coordonnée de positionnement d'un répéteur rp , $\{rp_j\}_j$ est déterminée en fonction au moins d'une position pp, $\{pp_i\}_i$ d'au moins une prise détectée dans la zone locale. La prise est détectée à partir d'une vidéo captée v, vl de la zone locale 3.

Par exemple, le fournisseur 16 d'au moins une coordonnée de positionnement d'au moins un répéteur fournit au moins une donnée rd relative à au moins un répéteur comportant au moins une coordonnée de positionnement d'un répéteur rp , $\{rp_j\}_j$ : $rd \supset rpi^k$,

$$rd \supset \left\{rpi_j^k\right\}_{j, k=1,2}.$$

Dans le cas où l'actionneur est un module de déplacement $18_1$, $18_2$', $18_2$", l'action motrice est une action de déplacement : am=dpt. Dans le cas où l'actionneur est un module de manipulation $18_2$''', tel un bras robotisé, l'action motrice est une action de manipulation : am=mnp.

En particulier, l'automate comporte un optimiseur 19 de couverture d'une zone locale par le réseau de communication sans fil. L'optimiseur 19 comporte le fournisseur 16 de coordonnées de positionnement de répéteur dans la zone locale 3.

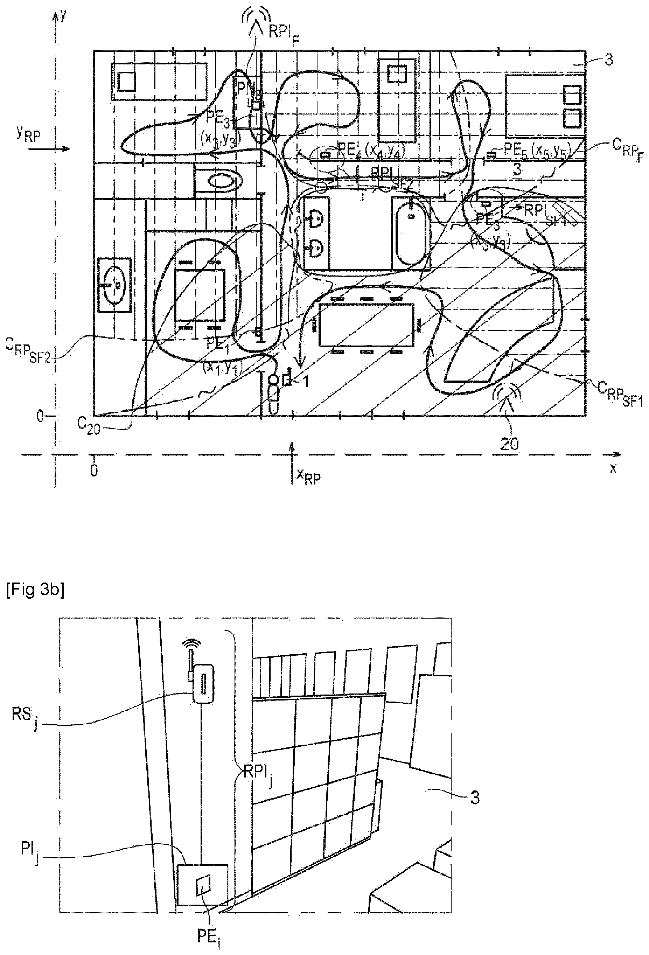

La figure 3a montre un schéma simplifié illustrant une carte de couverture du réseau de communication sans fil dans laquelle sont insérés au moins un indicateur de positionnement déterminé de répéteur dans la zone locale selon l'invention.

La zone locale 3 illustrée par la figure 3a est le plan d'une habitation composée de plusieurs pièces. Un routeur 20 placé dans la zone locale 3 génère et gère le réseau de communication sans fil 2. En raison de la position de ce routeur 20 dans la zone locale 3 et des matériaux utilisés pour certains murs dans cette zone locale 3, le réseau de communication sans fil 2 généré par le routeur 20 ne couvre pas la totalité de la zone locale 2. Il couvre $c_{20}$ (cf. zone hachurée diagonale) uniquement le séjour (pièce en bas à droite sur la figure), une partie de la cuisine (pièce en bas à gauche sur la figure) mais pas les chambres (pièces du haut sur la figure).

L'invention permet de déterminer des coordonnées de positionnement de répéteurs en fonction de position $(x_1,y_1)$, $(x_2,y_2)$, $(x_3,y_3)$, $(x_4,y_4)$, $(xs,ys)$, de prises détectées $PE_1$, $PE_2$, $PE_3$, $PE_4$, $PE_5$, $PN_5$ dans une vidéo captée dans la zone locale 3 et d'insérer au moins un indicateur $RPI_F$, $RPI_{SF1}$, $RPI_{SF2}$ de répéteur aux coordonnées de positionnement ainsi déterminée dans la carte de couverture du réseau, soit dans une carte préalablement générer par mise à jour de la carte, soit en générant directement un carte de positionnement de répéteur.

L'indicateur comporte notamment un cadre, et/ou un symbole graphique de répéteur, et/ou un symbole alphanumérique de répéteur, voire de type de répéteur, et éventuellement, un symbole de position en hauteur (flèche) dans notre exemple, en particulier si la carte est une carte bidimensionnelle.

La figure 3a illustre les couvertures générées par ces répéteurs, respectivement $c_{RPF}$ entourée par un trait - vague, $c_{RPSF1}$ en hachure horizontale, et $c_{CRPSF1}$ en hachure verticale.

La figure 3b montre une image illustrative d'une insertion soit dans une vidéo, soit en réalité augmentée, d'un indicateur de positionnement déterminé de répéteur dans la zone locale selon l'invention.

La figure 3b montre une image d'une zone locale 3 soit vu par l'utilisateur en réalité augmentée, soit d'une vidéo préalablement captée. Sur cette image de la zone locale 3, l'invention a ajoutée, inséré un indicateur $RPI_j$ de répéteur à une coordonnée déterminée de positionnement d'un répéteur préalablement fournie par l'invention.

L'indicateur comporte notamment un cadre pij, et/ou un symbole graphique de répéteur rsj , et/ou un symbole alphanumérique de répéteur, voire de type de répéteur, et éventuellement, un symbole de position en hauteur (en particulier, si le regard de l'utilisateur ne voit pas en réalité augmenté la prise à laquelle le répéteur doit être connecté).

Ainsi, l'invention permet une expertise sur terminal de communication, tel qu'un smartphone, une tablette, un casque ou des lunettes de réalité virtuelle et/ou augmentée, etc., de la couverture d'un réseau de communication sans fil, notamment wifi, d'une zone locale, par exemple en réalité augmentée. L'utilisateur se déplace dans la zone locale. Et, au fur et à mesure de ses déplacements, le terminal détermine et, éventuellement, affiche la qualité du réseau de communication sans fil, notamment en réalité augmentée. La qualité affichée est représentée notamment par des étiquettes avec, par exemple, un code couleur et/ou la valeur effective du signal en décibel, dB. Lorsque l'utilisateur a finalisé son parcours, le terminal affiche une carte de la zone locale qu'il a expertisé sur laquelle est potentiellement suggérée un emplacement de répéteur(s) du réseau de communication sans fil, notamment de répéteur(s) wifi afin d'améliorer la qualité du signal dans au moins une partie de la zone locale.

L'invention propose un emplacement de répéteur plus précis que ceux généralement proposés par des cartes fournies par un terminal de communication ne disposant pas de Lidar (carte trop abstraite), plus facile à utiliser que ceux généralement proposés par des cartes fournies par un terminal de communication disposant d'un Lidar (carte trop détaillées où tous les objets de la zone locale sont matérialisées) puisque l'invention matérialise uniquement des prises détectées sur lesquelles les répéteurs peuvent être connectés soit en termes d'alimentation, soit en termes de communication.

En effet, dès que le procédé d'optimisation selon l'invention est démarré, lancé, une capture vidéo est démarrée (par exemple une capture vidéo de l'écran du smartphone sur lequel est affiché un retour de la caméra du smartphone augmenté de valeur de qualité du signal du réseau de communication sans fil, tel qu'un signal wifi). Une analyse de la vidéo détermine les positions auxquelles il est pertinent de positionner un répéteur pour améliorer la couverture du réseau de communication sans fil, notamment un répéteur alimenté électriquement ne peut être positionné qu'à une position où se trouve une prise électrique, un répéteur connectable à un routeur de manière filaire, par exemple par Ethernet, ne peut être positionné qu'à une position où se trouve une prise de communication filaire. L'analyse vidéo permet de détecter les prises par détection d'objets, e.g. au moins d'algorithmes tels que Yolo™, etc. Ces informations de position de prises détectées sont couplées, notamment, à la carte de couverture du réseau de communication sans fil, en particulier la carte wifi, pour déterminer des emplacements possibles pour un ou plusieurs répéteurs.

La fourniture de coordonnées de positionnement des répéteurs ainsi déterminées sont notamment utiliser pour superposer, notamment tel qu'illustré par la figure 3b, au moins un élément virtuel par exemple sur la vidéo captée, en particulier sur l'image vidéo de la vidéo correspondant à au moins une coordonnée de positionnement d'un répéteur, indiquant ainsi à l'utilisateur où placer le répéteur. Ces éléments virtuels sont aussi nommés indicateurs de répéteurs. La vidéo ainsi modifiée, enrichie par l'indicateur de répéteur, est affichée par un terminal de communication ayant éventuellement mis en oeuvre l'invention.

Eventuellement, un indicateur de qualité peut être utilisé pour modifier, enrichir la vidéo permettant ainsi d'afficher en outre avec la vidéo la qualité du réseau de communication sans fil de la zone locale. Notamment, l'indicateur de qualité est superposé, incrusté dans une image vidéo, voire modifie l'image vidéo, notamment au moins d'un filtre, tel qu'un fil de couleur et/ou de luminosité, par exemple, associée à une position correspondant à la position de l'indicateur de qualité.

L'invention met en oeuvre un ou plusieurs des modes de réalisation décrits seuls ou en combinaison.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet. Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Procédé d'optimisation d'une couverture par un réseau de communication sans fil d'une zone locale comportant une fourniture d'au moins une coordonnée de positionnement d'au moins un répéteur dans une zone locale, la au moins une coordonnée de positionnement d'un répéteur étant déterminé en fonction au moins d'une position d'au moins une prise détectée dans la zone locale, la prise étant détectée à partir d'une vidéo captée de la zone locale.

2. Procédé d'optimisation selon la revendication précédente, le procédé d'optimisation comportant une détection de position de prises détectées dans la zone locale, au moins une position d'au moins une prise étant détectée à partir d'une vidéo captée de la zone locale.

3. Procédé d'optimisation selon la revendication précédente, le procédé d'optimisation comportant une capture conjointe d'une vidéo de la zone locale et d'une position associée à au moins une image vidéo de la vidéo.

4. Procédé d'optimisation selon l'une quelconque des revendications précédentes, dans lequel la au moins une coordonnée de positionnement d'un répéteur est déterminée en outre en fonction de données positionnées de qualité du réseau de communication sans fil.

**5.** Procédé d'optimisation selon la revendication précédente, dans lequel une donnée positionnée de qualité du réseau de communication sans fil est une donnée captée dans la zone locale.

**6.** Procédé d'optimisation selon l'une quelconque des revendications 4 ou 5, le procédé d'optimisation comportant une capture des données positionnées de qualité du réseau de communication sans fil.

**7.** Procédé d'optimisation selon l'une quelconque des revendications 4 à 6, le procédé d'optimisation comportant une capture conjointe de données de qualité du réseau de communication sans fil et d'une position associée à la donnée de qualité captée.

**8.** Procédé d'optimisation selon l'une quelconque des revendications précédentes, le procédé d'optimisation comportant une détection de prise à partir d'une vidéo captée de la zone locale.

**9.** Procédé d'optimisation selon l'une quelconque des revendications précédentes, le procédé d'optimisation comportant une analyse de la vidéo captée de la zone locale à partir de laquelle au moins une prise est détectée dans la zone locale.

**10.** Procédé d'optimisation selon l'une quelconque des revendications précédentes, le procédé d'optimisation comportant une détermination de la au moins une position d'au moins une prise détectée en fonction d'au moins une position associée à au moins une image vidéo de la vidéo captée.

**11.** Procédé d'optimisation selon l'une quelconque des revendications précédentes, le procédé d'optimisation comportant une insertion dans un support graphique d'au moins un indicateur fonction d'au moins une coordonnée de positionnement déterminé de répéteur dans la zone locale.

**12.** Procédé d'optimisation selon la revendication précédente, dans lequel le support graphique est au moins un support parmi les suivants :

- une carte de couverture générée en fonction données positionnées captées de qualité du réseau de communication sans fil ;
- la vidéo captée de la zone locale ;
- un support de réalité augmentée.

**13.** Programme comprenant des instructions de code de programme pour l'exécution des étapes du procédé d'optimisation selon l'une quelconque des revendications 1 à 12 lorsque ledit programme est exécuté par un processeur.

**14.** Terminal de communication apte à se connecter à un réseau de communication sans fil comportant un fournisseur d'au moins une coordonnée de positionnement d'au moins un répéteur dans une zone locale, la au moins une coordonnée de positionnement d'un répéteur étant déterminé en fonction au moins d'une position d'au moins une prise dans la zone locale, la position de la prise étant détectée à partir d'une vidéo captée de la zone locale.

**15.** Automate comportant :

- au moins un actionneur apte à effectuer une action motrice ;
- un émetteur/récepteur au travers d'un réseau de communication sans fil ;
- un fournisseur d'au moins une coordonnée de positionnement d'au moins un répéteur dans une zone locale, la au moins une coordonnée de positionnement d'un répéteur étant déterminé en fonction au moins d'une position d'au moins une prise dans la zone locale, la position de la prise étant détectée à partir d'une vidéo captée de la zone locale.

[Fig 1]

[Fig 2a]

[Fig 2b]

se
ss
am=mnp
10
1
18'2
16
18"2 18'''2
am=dpt
181

20

2

[Fig 3a]

[Fig 3b]

Europäisches
Patentamt

European
Patent Office

Office européen
des brevets

**RAPPORT DE RECHERCHE EUROPEENNE**

Numéro de la demande

EP 23 19 9591

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2018/299899 A1 (SUVARNA SARATH [US] ET AL) 18 octobre 2018 (2018-10-18) * alinéa [0065] – alinéa [0067]; figure 8 * | 1-15 | INV. H04W24/02 ADD. H04W84/12 H04W84/04 |
| Y | US 11 416 002 B1 (DAY CHRISTOPHER N [US]) 16 août 2022 (2022-08-16) * colonne 16 – colonne 17 * | 1-15 | |
| A | US 2014/120945 A1 (SHARMA ABHINAV [US] ET AL) 1 mai 2014 (2014-05-01) * alinéa [0036] – alinéa [0041]; figure 3B * | 1-15 | |
| A | EP 3 634 029 A1 (DEUTSCHE TELEKOM AG [DE]) 8 avril 2020 (2020-04-08) * alinéa [0007]; figure 4 * | 1-15 | |

**DOMAINES TECHNIQUES RECHERCHES (IPC)**

H04W
H04N

Le présent rapport a été établi pour toutes les revendications

| Lieu de la recherche | Date d'achèvement de la recherche | Examinateur |
|---|---|---|
| Munich | 13 février 2024 | Tozlovanu, Ana-Delia |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 23 19 9591

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-02-2024

| Document brevet cité au rapport de recherche | Date de publication | Membre(s) de la famille de brevet(s) | Date de publication |
|---|---|---|---|
| US 2018299899 A1 | 18-10-2018 | AUCUN | |
| US 11416002 B1 | 16-08-2022 | AUCUN | |
| US 2014120945 A1 | 01-05-2014 | CN 104755952 A | 01-07-2015 |
| | | EP 2914972 A1 | 09-09-2015 |
| | | JP 6199402 B2 | 20-09-2017 |
| | | JP 2016502652 A | 28-01-2016 |
| | | US 2014120945 A1 | 01-05-2014 |
| | | WO 2014070398 A1 | 08-05-2014 |
| EP 3634029 A1 | 08-04-2020 | EP 3634029 A1 | 08-04-2020 |
| | | ES 2859426 T3 | 04-10-2021 |

EPO FORM P0460

Pour tout renseignement concernant cette annexe : voir Journal Officiel de l'Office européen des brevets, No.12/82